# EUROPEAN PATENT APPLICATION

(11) **EP 3 336 331 A1**
(43) Date of publication of application: **20.06.2018**
(21) Application number: 17190998.9
(22) Date of filing: 14.09.2017
(51) Int. Cl.: F02C 7/045

(54) **SOUND ATTENUATING SYSTEM FOR A GAS TURBINE ENGINE**

(30) Priority: 27.09.2016 US 201615276904
(71) Applicant: General Electric Company, Schenectady, NY 12345 (US)
(72) Inventor: VENUGOPALSETTY, Dinesh, 560066 Bangalore, Karnataka (IN); LOUD, Richard Lynn, Schenectady, NY New York 12345 (US); AKULU, Pramod, 560066 Bangalore, Karnataka (IN); SANKARAKUMAR, Haribalakrishnan, 560066 Bangalore (IN); BHATNAGAR, Shubhra, 560066 Bangalore, Karnataka (IN); MERCHANT, Laxmikant, 560066 Bangalore, Karnataka (IN)
(74) Representative: Lee, Brenda

(57) **Abstract**

The present disclosure is directed to a sound attenuation system (100) for a gas turbine engine (10). The sound attenuation system (100) includes a compressor inlet casing (86) having a compressor inlet casing inner surface (88) and defining a compressor inlet passage (94) extending therethrough. An inlet plenum body (50) couples to the compressor inlet casing (86). The inlet plenum body (50) includes an inlet body inner surface (66, 70, 74, 78, 82) and defines an inlet plenum (84) therein. One or more sound attenuating panels (102) couple to at least one of the compressor inlet casing inner surface (88) and the inlet plenum body inner surface (66, 70, 74, 78, 82). Each sound attenuating panel (102) includes a first sheet (104) defining a first plurality of apertures (106) extending therethrough and a second sheet (108) spaced apart from the first sheet (104).

## Description

### FIELD OF THE TECHNOLOGY

The present disclosure generally relates to gas turbine engines. More particularly, the present disclosure relates to sound attenuating systems for gas turbine engines.

### BACKGROUND

A gas turbine engine generally includes an inlet section, a compressor section, one or more combustors, a turbine, and an exhaust section. Air enters the gas turbine engine through the inlet section. The compressor section progressively increases the pressure of the air flowing therethrough and supplies this compressed air to the one or more combustors. The compressed air and a fuel (e.g., natural gas) mix within the combustors and burn in one or more combustion chambers to generate high pressure and high temperature combustion gases. The combustion gases flow from the combustors into the turbine where they expand to produce work. For example, expansion of the combustion gases in the turbine may rotate a rotor shaft connected, e.g., to a generator to produce electricity. The combustion gases then exit the gas turbine engine through the exhaust section.

The compressor includes a plurality of compressor blades, which increase the pressure of the air flowing therethrough. More specifically, the compressor blades may couple to the rotor shaft. As such, the rotation of the rotor shaft causes the compressor blades coupled thereto to rotate as well. This rotation of the compressor blades imparts kinetic and/or thermal energy in the air flowing through the compressor, thereby increasing the pressure thereof.

The rotation of the compressor blades creates a high intensity sound. In this respect, the inlet section, which is positioned upstream of the compressor, may include a silencer to attenuate the intensity of the sound produced by the compressor. In some configurations, the silencer may be spaced apart from and coupled to the compressor by a duct, an inlet plenum, or other components. As such, it may be necessary to wrap the duct and/or the inlet plenum in a sound attenuating material to prevent the noise from escaping the duct before attenuation by the silencer.

### BRIEF DESCRIPTION OF THE TECHNOLOGY

Aspects and advantages of the technology will be set forth in part in the following description, or maybe obvious from the description, or maybe learned through practice of the technology.

In one aspect, the present disclosure is directed to a sound attenuation system for a gas turbine engine. The sound attenuation system includes a compressor inlet casing having a compressor inlet casing inner surface and defining a compressor inlet passage extending therethrough. An inlet plenum body couples to the compressor inlet casing. The inlet plenum body includes an inlet body inner surface and defines an inlet plenum therein. One or more sound attenuating panels couple to at least one of the compressor inlet casing inner surface and the inlet plenum body inner surface of the duct. Each sound attenuating panel includes a first sheet defining a first plurality of apertures extending therethrough and a solid second sheet spaced apart from the first sheet.

A further aspect of the present disclosure is directed to a gas turbine engine that includes an inlet section, a compressor, one or more combustors, a turbine, and an exhaust section. The inlet section includes an inlet plenum body having an inlet plenum body inner surface and defining an inlet plenum therein. The compressor includes a compressor inlet casing coupled to the inlet plenum body. The compressor inlet casing includes a compressor inlet casing inner surface and defines a compressor inlet passage extending therethrough. One or more sound attenuating panels couple to at least one of the compressor inlet casing inner surface and the inlet plenum body inner surface. Each sound attenuating panel includes a first sheet defining a first plurality of apertures extending therethrough and a solid second sheet spaced apart from the first sheet.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended FIGS., in which:
FIG. 1 is a schematic view of an exemplary gas turbine engine that may incorporate various embodiments disclosed herein;
FIG. 2 is a side view of an exemplary inlet section of the gas turbine engine that may incorporate various embodiments disclosed herein;
FIG. 3 is a cross-sectional side view of an inlet plenum body of the inlet section and a compressor inlet casing, illustrating a sound attenuating system having one or more sound attenuating panels in accordance with the embodiments disclosed herein;
FIG. 4 is a cross-sectional side view of an duct of the inlet, illustrating the sound attenuating system having one or more sound attenuating panels therein;
FIG. 5 is an exploded perspective view of one embodiment of the one or more sound attenuating panels, illustrating the various features thereof;
FIG. 6 is an exploded perspective view of another embodiment of the one or more sound attenuating panels, illustrating the various features thereof; and
FIG. 7 is a cross-sectional view of a wall that may form a portion of or be incorporated into the inlet plenum body, the compressor inlet casing, or a cone, illustrating a cavity formed therein for mounting one of the sound attenuating panels.

Repeat use of reference characters in the present specification and drawings is intended to represent the same or analogous features or elements of the present technology.

### DETAILED DESCRIPTION OF THE TECHNOLOGY

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

Each example is provided by way of explanation of the technology, not limitation of the technology. In fact, it will be apparent to those skilled in the art that modifications and variations can be made in the present technology without departing from the scope or spirit thereof. For instance, features illustrated or described as part of one embodiment may be used on another embodiment to yield a still further embodiment. Thus, it is intended that the present technology covers such modifications and variations as come within the scope of the appended claims and their equivalents. Although an industrial or land-based gas turbine is shown and described herein, the present technology as shown and described herein is not limited to a land-based and/or industrial gas turbine unless otherwise specified in the claims. For example, the technology as described herein may be used in any type of turbine including, but not limited to, aviation gas turbines (e.g., turbofans, etc.), steam turbines, and marine gas turbines.

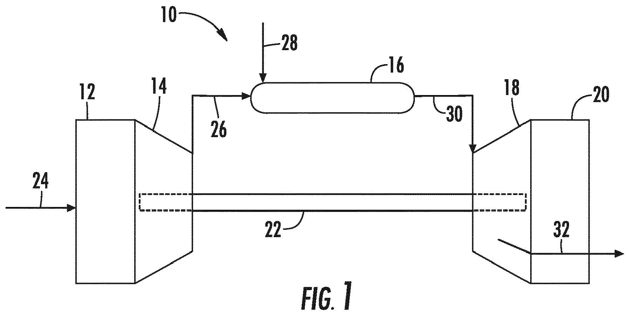

Now referring to the drawings, wherein identical numerals indicate the same elements throughout the figures, FIG. 1 schematically illustrates an exemplary gas turbine engine 10. As depicted therein, the gas turbine engine 10 includes an inlet section 12, a compressor 14, one or more combustors 16, a turbine 18, and an exhaust section 20. The compressor 14 and turbine 18 may be coupled by a rotor shaft 22, which may be a single shaft or a plurality of shaft segments coupled together.

During operation, the gas turbine engine 10 produces mechanical rotational energy, which may, e.g., be used to generate electricity. More specifically, air 24 enters the inlet section 12 of the gas turbine engine 10. From the inlet section 12, the air 24 flows into the compressor 14, where it is progressively compressed to provide compressed air 26 to each of the combustors 16. The compressed air 26 in each of the combustors 16 mixes with a fuel 28. The resulting fuel-air mixture burns in each combustor 16 to produce high temperature and high pressure combustion gases 30. From the combustors 16, the combustion gases 30 flow through the turbine 18, which extracts kinetic and/or thermal energy therefrom. This energy extraction rotates the rotor shaft 22, thereby creating mechanical rotational energy for powering the compressor 14 and/or generating electricity. Exhaust gases 32 exit the gas turbine engine 10 through the exhaust section 20.

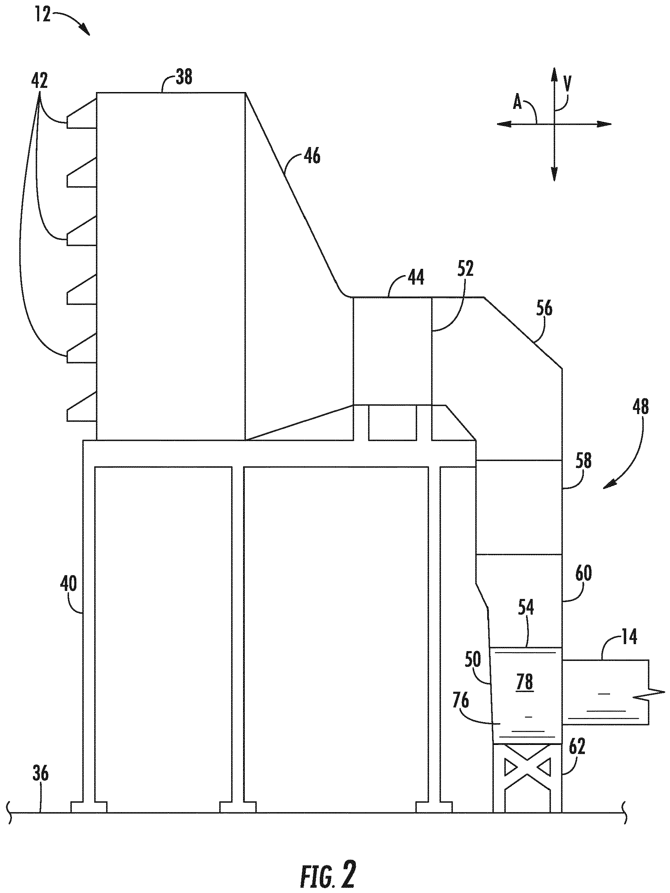

FIG. 2 is a side view of one embodiment of the inlet section 12. As shown, the inlet section 12 is coupled to a base surface 36, which may be the ground, a power plant floor, or any other suitable equipment baseline. In this respect, the inlet section 12 defines a vertical direction V and an axial direction A. Specifically, the vertical direction V generally extends orthogonal to a base surface 36. The axial direction A generally extends orthogonal to the vertical direction V and parallel to the base surface 36.

In the embodiment shown in FIG. 2, the inlet section 12 includes a filter housing 38. In particular, the filter housing 38 may include various filters, screens, cooling coils, moisture separators, and/or other devices to purify and otherwise condition the air 24 entering the gas turbine engine 10. The filter housing 38 may be positioned vertically above the base surface 36 to reduce the amount of dust or other particles that enter the inlet section 12 during operation. As such, a first support structure 40 may support the filter housing 38 above the base surface 36.

The embodiment of the inlet section 12 shown in FIG. 2 also includes a plurality of weather hoods 42 coupled to an upstream side of the filter housing 38. More specifically, each weather hood 42 directs the air 24 entering the inlet section 12 to flow upward (i.e., vertically away from the base surface 36) into the filter housing 38. In this respect, the plurality of weather hoods 42 minimizes the amount of rain or other precipitation entering the filter housing 38. As such, the weather hoods 42 lessen the load on any moisture separators in the filter housing 38. In the embodiment shown in FIG. 2, the inlet section 12 includes six weather hoods 42. Nevertheless, the inlet section 12 may include more or less weather hoods 42. In fact, some embodiments of the inlet section 12 may not include any weather hoods 42.

The embodiment of the inlet section 12 shown in FIG. 2 may include a silencer 44 positioned downstream of and axially spaced apart from the filter housing 38. The silencer 44 may include various baffles, panels, acoustic insulation packets, and/or other devices for attenuating the intensity of at least a portion of the sound generated by the compressor 14. In certain embodiments, for example, the insulation packets may be formed from mineral wool wrapped in woven glass fiber fabric. As shown in FIG. 2, the silencer 44 may be smaller in the vertical direction V (i.e., shorter) than the filter housing 38. In this respect, a filter housing transition piece 46 may couple to and transition between the silencer 44 and the filter housing 38. Some embodiments may not include the silencer 44.

The inlet section 12 further includes a duct 48 that fluidly couples the silencer 44 and an inlet plenum body 50. In this respect, the duct 48 receives the air 24 from the silencer 44 and/or the filter housing 38 and supplies the air 24 to the inlet plenum body 50. In the embodiment shown in FIG. 2, an upstream end 52 of the duct 48 couples the silencer 44 and a downstream end 54 of the duct 48 couples to the inlet plenum body 50. In embodiments of the inlet section 12 that do not include the silencer 44, the upstream end 52 of the duct 48 may couple directly to the filter housing 38.

FIG. 2 illustrates one embodiment of the duct 48. As shown, the inlet plenum body 50 may be vertically and axially spaced apart from the silencer 44. As such, the duct 48 includes various duct segments that extend axially away and downward from the silencer 44 to the inlet plenum body 50. More specifically, an elbow segment 56 couples to the silencer 44 and extends axially outward therefrom before extending downward. A vertically-extending segment 58 couples to and extends downward from the elbow segment 56. A transition segment 60 couples to the vertically-extending segment 58 and extends downward therefrom before coupling to the inlet plenum body 50. In the embodiment shown in FIG. 2, the inlet plenum body 50 is smaller in the axial direction A (i.e., narrower) than the silencer 44. As such, the transition segment 60 narrows in the axial direction A as it extends downward, thereby transitioning between the silencer 44 and the inlet plenum body 50. In alternate embodiments, however, the duct 48 may have any suitable configuration that extends between the silencer 44 or the filter housing 38 and the inlet plenum body 50. In fact, the duct 48 maybe formed from any combination of duct segments.

The inlet plenum body 50 fluidly couples the downstream end 54 of the duct 48 to the compressor 14. In this respect, the inlet plenum body 50 receives the air 24 from the duct 48 and supplies the air 24 to the compressor 14. In the embodiment shown in FIG. 2, the inlet plenum body 50 couples to the transition segment 60. Although, the inlet plenum body 50 may couple to any duct segment forming the downstream end 54 of the duct 48. A second support structure 62 may support the inlet plenum body 50 above the base surface 36. As shown, the second support structure 62 is separate from the first support structure 40. Although, the first and second support structures 40, 62 may be portions of a single structure in other embodiments.

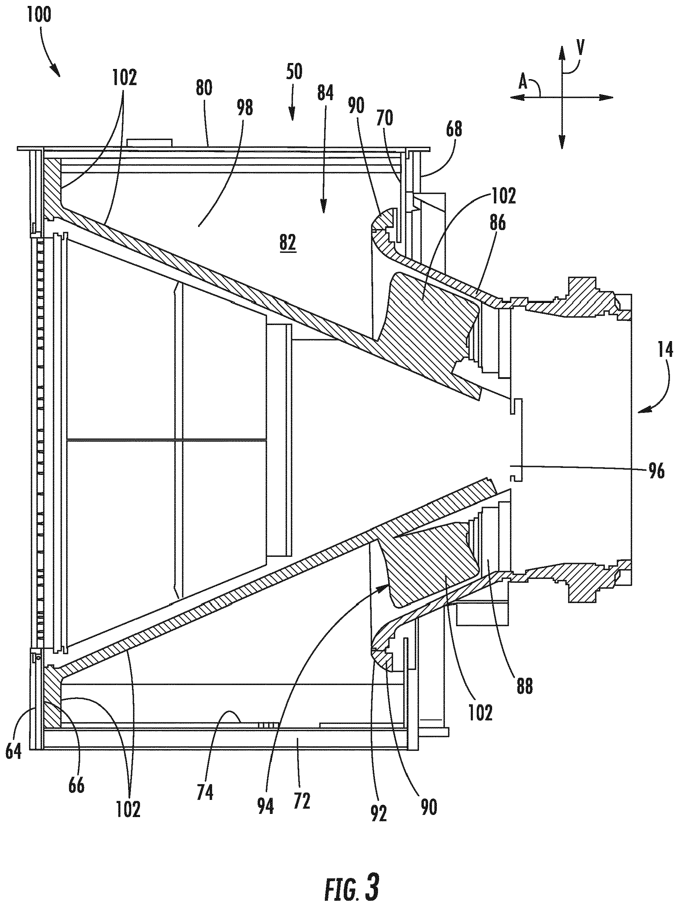

FIG. 3 is a cross-sectional view of one embodiment of the inlet plenum body 50. More specifically, the inlet plenum body 50 includes a forward wall 64 having a forward wall inner surface 66, an aft wall 68 having an aft wall inner surface 70, a bottom wall 72 having a bottom wall inner surface 74, a front wall 76 (FIG. 2) having a front wall inner surface 78 (FIG. 2), and a rear wall 80 having a rear wall inner surface 82. The forward and aft walls 64, 68 are axially spaced apart, and the bottom wall 72 is positioned axially between the forward and aft walls 64, 68. The front and rear walls 76, 80 are spaced apart by the forward, aft, and bottom walls 64, 68, 72. In this respect, the inlet plenum body 50 defines an inlet plenum 84 therein. Although depicted as rectangular in FIG. 3, the inlet plenum body 50 may have any suitable cross-section.

As mentioned above, the inlet plenum body 50 couples to the compressor 14. More specifically, the compressor 14 includes a compressor inlet casing 86 having a compressor inlet casing inner surface 88. The compressor inlet casing 86 may have a bell mouth-like shape in some embodiments. As shown, the compressor inlet casing 86 extends through the aft wall 68 of the inlet plenum body 50 into the inlet plenum 84. In this respect, at least a portion of the compressor inlet casing 86 is positioned axially between the forward and aft walls 64, 68. An inlet plenum body extension 90 couples an upstream end of the compressor inlet casing 86, which is positioned in the inlet plenum 84, to the aft wall inner surface 70 of the inlet plenum body 50. The inlet plenum body extension 90 includes an inlet plenum body extension outer surface 92 that is axially aligned with a portion of the compressor inlet casing inner surface 88. Furthermore, the compressor inlet casing 86 defines a compressor inlet passage 94 in fluid communication with the inlet plenum 84. In alternate embodiments, the inlet plenum body 50 and the compressor 14 may couple in any suitable manner.

The inlet plenum body 50 also includes a cone 96 having a cone outer surface 98 positioned in the inlet plenum 84. In this respect, the cone 96 directs air flowing through the inlet plenum 84 into the compressor 14 in a generally uniform manner. More specifically, the cone 96 extends axially outward from the forward wall inner surface 66 through the inlet plenum 84 and into the compressor inlet passage 94. As shown in FIG. 3, the cone 96 may have a conical or frustoconical shape. As such, the compressor inlet casing 86 and the cone 96 give the compressor inlet passage 94 an annular shape. Nevertheless, the cone 96 may have any suitable shape in other embodiments.

FIG. 3 further illustrates one embodiment of a sound attenuation system 100 in accordance with the embodiments disclosed herein. As discussed above, operation of the compressor 14 may generate a high intensity sound. At least a portion of the sound generated by the compressor 14 may be emitted through the inlet section 12. In this respect, the sound attenuation system 100 reduces the intensity of the sound generated by the compressor 14 and emanating from the inlet section 12.

As shown in FIG. 3, the sound attenuation system 100 includes one or more sound attenuating panels 102 that may couple to the inlet plenum body 50, the compressor inlet casing 86, and/or the cone 96. In the embodiment shown in FIG. 3, the sound attenuating panels 102 couple to the forward wall inner surface 66, the compressor inlet casing inner surface 88, and the cone outer surface 98. Specifically, the one or more sound attenuating panels 102 coupled to the compressor inlet casing inner surface 88 are axially aligned with and vertically spaced apart from the one or more sound attenuating panels 102 coupled to the cone outer surface 98. In alternate embodiments, however, the one or more sound attenuating panels 102 may couple to any one of or combination of the forward wall inner surface 66, the aft wall inner surface 70, the bottom wall inner surface 74, the front wall inner surface 78, the rear wall inner surface 82, the compressor inlet casing inner surface 88, the inlet plenum body extension outer surface 92, and/or the cone outer surface 98.

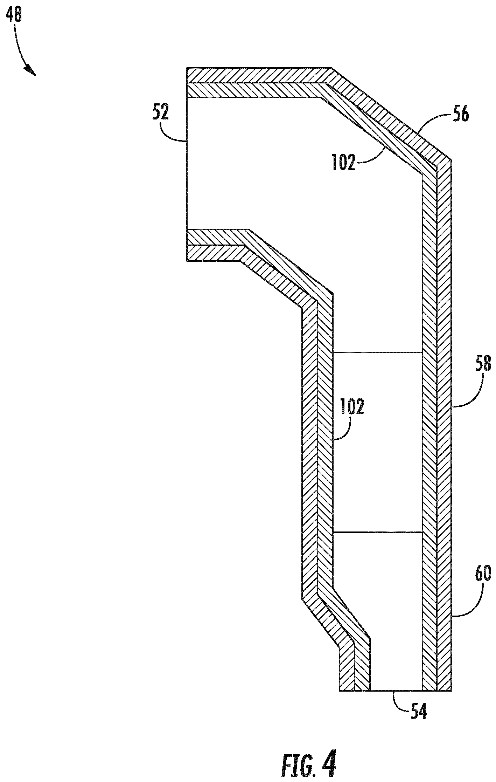

The sound attenuating panels 102 may also couple to the duct 48 in some embodiments. In the embodiment shown in FIG. 4, for example the sound attenuating panels 102 are coupled to inside surfaces of the elbow segment 56, the vertically-extending segment 58, and the transition segment 60. Nevertheless, the sound attenuating panels 102 may not couple to all portions of the duct 48 in alternate embodiments.

In the embodiment shown in FIG. 3, the sound attenuating panels 102 cover the entirety of the forward wall inner surface 66, the compressor inlet casing inner surface 88, and the cone outer surface 98. In this respect, one sound attenuating panel 102 may be sufficient to cover the entirety of each of these surfaces 66, 88, 98. Alternately, multiple sound attenuating panels 102 may be necessary to cover the entirety of each of the surfaces 66, 88, 98. In further embodiments, one or more of the sound attenuating panels 102 may cover only a portion of each of the surfaces 66, 88, 98.

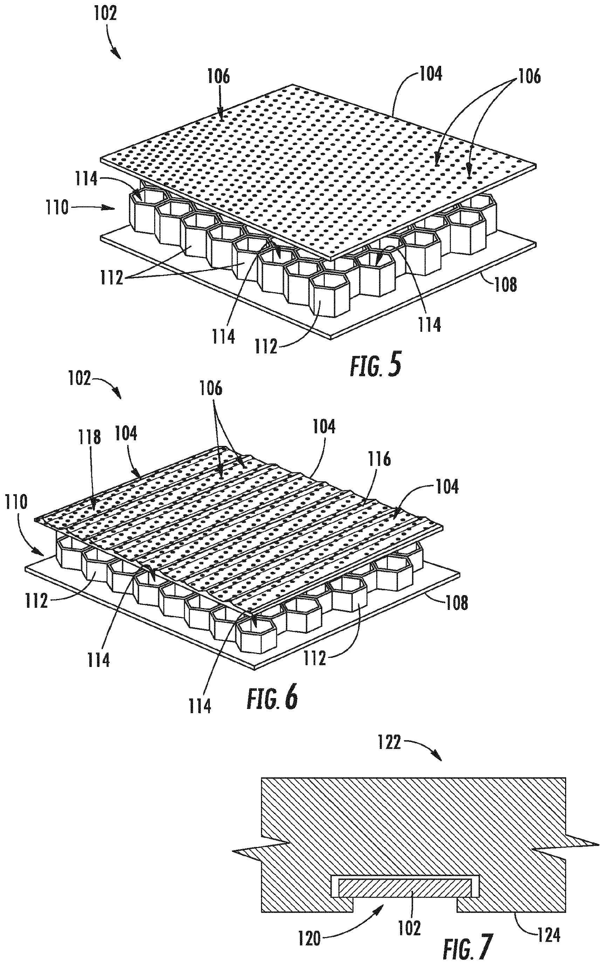

FIG. 5 illustrates an embodiment of one of the sound attenuating panels 102 in greater detail. More specifically, the sound attenuating panel 102 may be a micro-perforated panel that includes a first sheet 104 defining a plurality of apertures 106 extending therethrough. The apertures 106 maybe generally uniformly spaced apart. The sound attenuating panel 102 also includes a solid second sheet 108 spaced apart from the first sheet 104. The first and second sheets 104, 108 are planar in the embodiment shown in FIG. 5. An insert 110 is positioned between the first and second sheets 104, 108 to space the first and second sheets 104, 108 apart. In the embodiment shown in FIG. 5, the insert 110 has a honeycomb-like configuration. In particular, the insert 110 includes a plurality of interconnected cells 112 that each define a chamber 114 therein. Each chamber 114 is in fluid communication with one or more of the apertures 106 defined by the first sheet 104. As shown, the sound attenuating panel 102 may be devoid of any sound absorbing material.

FIG. 6 shows another embodiment of one of the sound attenuating panels 102. In the embodiment shown in FIG. 6, the first sheet 104 is corrugated. That is, the first sheet 104 includes a plurality of ridges 116 spaced apart by a plurality of valleys 118. In all other aspects, the embodiment of the sound attenuating panel 102 shown in FIG. 6 is the same as the embodiment of the sound attenuating panel 102 shown in FIG. 5.

In alternate embodiments, the sound attenuating panels 102 may have other configurations. In fact, the sound attenuating panels 102 may have any suitable construction so long as the sound attenuating panel 102 includes the first sheet 104, which defines the plurality of apertures 106, and the second sheet 108, which is spaced apart from the first sheet 104. For example, the first and second sheets 104, 108 may be spaced apart by posts (not shown) or tubes (not shown) in certain embodiments. Furthermore, like the first sheet 104, the second sheet 108 may include a plurality of apertures in some embodiments.

As mentioned above, the one or more sound attenuating panels 102 may couple to various surfaces of the inlet plenum body 50, the compressor inlet casing 86, and/or the cone 96. In one embodiment, the sound attenuating panels 102 be cast with or otherwise fused with the inlet plenum body 50, the compressor inlet casing 86, and/or the cone 96. Specifically, one or more sound attenuating panels 102 may be placed in a mold (not shown) for forming the inlet plenum body 50, the compressor inlet casing 86, or the cone 96. The molten material poured into the mold fuses with the one or more sound attenuating panels 102 in the mold upon solidification. Any suitable casting process (e.g., lost foam casting) may be used. This method may be useful when the sound attenuating panels 102 cover the majority or all of a surface of the inlet plenum body 50, the compressor inlet casing 86, and/or the cone 98.

In another embodiment, one or more cavities 120 defined by the inlet plenum body 50, the compressor inlet casing 86, and/or the cone 96 may receive one or more of the sound attenuating panels 102. FIG. 7 illustrates a wall 122, which may form a portion of or otherwise be incorporated into the inlet plenum body 50, the compressor inlet casing 86, and/or the cone 96. As shown, the cavity 120 is machined into a surface 124 of the wall 122, and the sound attenuating panel 102 is positioned therein. In some embodiments, the cavity 120 maybe T-shaped to retain the sound attenuating panel 102 therein. This method maybe used when the sound attenuating panels 102 cover only a small portion of the inlet plenum body 50, the compressor inlet casing 86, and/or the cone 96. Furthermore, this method is useful for coupling the sound attenuating panels 102 to corners or other transitions between the inlet plenum body 50, the compressor inlet casing 86, and/or the cone 96.

In further embodiments, the sound attenuating panels 102 may couple to the inlet plenum body 50, the compressor inlet casing 86, and/or the cone 96 in any suitable manner.

In yet further embodiments, the inlet plenum body 50, the compressor inlet casing 86, and/or the cone 96 may be cast or otherwise formed in a manner such that the cone outer surface 98 simulates the sound attenuating panels 102.

As discussed in greater detail above, the sound attenuation system 100 disclosed herein includes the one or more sound attenuation panels 102 coupled to the inlet plenum body 50, the compressor inlet casing 86, and/or the cone 96. The inlet plenum body 50 is the portion of the inlet section 12 located closest to the compressor 14, the compressor inlet casing 86 is part of the compressor 14. In this respect, the sound attenuation system 100 attenuates the intensity of the sound produced by the compressor 14 and emitted through the inlet section 12 proximate to the source of the sound (i.e., the compressor 14). Sound attenuation in conventional systems, however, occurs in the silencer 44, which may be spaced apart from the compressor 14 by the duct 48 and inlet plenum body 50. Accordingly, the sound attenuation system 100 may reduce or eliminate the need to wrap the duct 48 in sound attenuating material. Moreover, the sound attenuation system 100 may also reduce the necessary extent of the silencer 44 (e.g., the size thereof) or eliminate the need for the silencer 44 altogether.

This written description uses examples to disclose the technology, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A sound attenuation system, comprising:
   a compressor inlet casing comprising a compressor inlet casing inner surface and defining a compressor inlet passage extending therethrough;
   an inlet plenum body coupled to the compressor inlet casing, the inlet plenum body comprising an inlet body inner surface and defining an inlet plenum therein; and
   one or more sound attenuating panels coupled to at least one of the compressor inlet casing inner surface and the inlet plenum body inner surface, each sound attenuating panel comprising:
      a first sheet defining a first plurality of apertures extending therethrough; and
      a second sheet spaced apart from the first sheet.
2. The sound attenuating system of clause 1, further comprising:
   a cone at least partially positioned in the inlet plenum, the cone comprising a cone outer surface, and wherein at least one of the sound attenuating panels couples to the cone outer surface.
3. The sound attenuating system of any preceding clause, wherein the cone is partially positioned in the compressor inlet passage.
4. The sound attenuating system of any preceding clause, wherein a portion of the at least one sound attenuating panel coupled to the cone is axially aligned with a portion of the at least one sound attenuating panel coupled to the compressor inlet casing inner surface.
5. The sound attenuating system of any preceding clause, wherein the first sheet and the second sheet are planar.
6. The sound attenuating system of any preceding clause, wherein the first sheet is corrugated.
7. The sound attenuating system of any preceding clause, wherein each sound attenuating panel comprises a honeycomb insert positioned between and coupled to the first sheet and the second sheet.
8. The sound attenuating system of any preceding clause, further comprising:
   a duct coupled to the inlet plenum body, wherein at least one of the one or more sound attenuating pads is coupled the duct.
9. The sound attenuating system of any preceding clause, wherein at least one of the one or more sound attenuating panels is fused with at least one of the compressor inlet casing and the inlet plenum body.
10. The sound attenuating system of any preceding clause, wherein at least one of the one or more sound attenuating panels is positioned in a cavity defined by a wall of at least one of the compressor inlet casing and the inlet plenum body.
11. A gas turbine engine, comprising:
   an inlet section comprising an inlet plenum body, the inlet plenum body comprising an inlet plenum body inner surface and defining an inlet plenum therein;
   a compressor comprising a compressor inlet casing coupled to the inlet plenum body, the compressor inlet casing comprising a compressor inlet casing inner surface and defining a compressor inlet passage extending therethrough;
   one or more combustors;
   a turbine; and
   one or more sound attenuating panels coupled to at least one of the compressor inlet casing inner surface and the inlet plenum body inner surface, each sound attenuating panel comprising:
      a first sheet defining a first plurality of apertures extending therethrough; and
      a second sheet spaced apart from the first sheet.
12. The gas turbine engine of any preceding clause, further comprising:
   a cone at least partially positioned in the inlet plenum, the cone comprising a cone outer surface, and wherein at least one of the sound attenuating panels couples to the cone outer surface.
13. The gas turbine engine of any preceding clause, wherein the cone is partially positioned in the compressor inlet passage.
14. The gas turbine engine of any preceding clause, wherein a portion of the at least one sound attenuating panel coupled to the cone is axially aligned with a portion of the at least one sound attenuating panel coupled to the compressor inlet casing inner surface.
15. The gas turbine engine of any preceding clause, wherein each sound attenuating panel comprises a honeycomb insert positioned between and coupled to the first sheet and the second sheet.
16. The gas turbine engine of any preceding clause, wherein the inlet section comprises a duct coupled to the inlet plenum body, and wherein at least one of the one or more sound attenuating pads is coupled the duct.
17. The gas turbine engine of any preceding clause, wherein at least one of the one or more sound attenuating panels is fused with a wall of at least one of the compressor inlet casing and the inlet plenum body.
18. The gas turbine engine of any preceding clause, wherein at least one of the one or more sound attenuating panels is positioned in a cavity defined by a wall of at least one of the compressor inlet casing and the inlet plenum body.
19. The gas turbine engine of any preceding clause, wherein the cone is cast with at least one of the one or more sound attenuating panels.
20. The gas turbine engine of any preceding clause, wherein the cone is cast such that a cone outer surface of the cone simulates the one or more sound attenuating panels.

## Claims

1. A sound attenuation system (100), comprising:
a compressor inlet casing (86) comprising a compressor inlet casing inner surface (88) and defining a compressor inlet passage (94) extending therethrough;
an inlet plenum body (50) coupled to the compressor inlet casing (86), the inlet plenum body (50) comprising an inlet body inner surface (66, 70, 74, 78, 82) and defining an inlet plenum (84) therein; and
one or more sound attenuating panels (102) coupled to at least one of the compressor inlet casing inner surface (88) and the inlet plenum body inner surface (66, 70, 74, 78, 82), each sound attenuating panel (102) comprising:
a first sheet (104) defining a first plurality of apertures (106) extending therethrough; and
a second sheet (108) spaced apart from the first sheet (104).

2. The sound attenuating system (100) of claim 1, further comprising:
a cone (96) at least partially positioned in the inlet plenum (84), the cone (96) comprising a cone outer surface (98), and wherein at least one of the sound attenuating panels (102) couples to the cone outer surface (98).

3. The sound attenuating system (100) of claim 2, wherein the cone (96) is partially positioned in the compressor inlet passage (94).

4. The sound attenuating system (100) of claim 3, wherein a portion of the at least one sound attenuating panel (102) coupled to the cone (96) is axially aligned with a portion of the at least one sound attenuating panel (102) coupled to the compressor inlet casing inner surface (88).

5. The sound attenuating system (100) of any preceding claim, wherein the first sheet (104) and the second sheet (108) are planar.

6. The sound attenuating system (100) of any of claims 1 to 4, wherein the first sheet (104) is corrugated.

7. The sound attenuating system (100) of any preceding claim, wherein each sound attenuating panel (102) comprises a honeycomb insert (110) positioned between and coupled to the first sheet (104) and the second sheet (108).

8. The sound attenuating system (100) of any preceding claim, further comprising:
a duct (48) coupled to the inlet plenum body (50), wherein at least one of the one or more sound attenuating pads (102) is coupled the duct (48).

9. The sound attenuating system (100) of any preceding claim, wherein at least one of the one or more sound attenuating panels (102) is fused with at least one of the compressor inlet casing (86) and the inlet plenum body (50).

10. The sound attenuating system (100) of any of claims 1, to 8 wherein at least one of the one or more sound attenuating panels (102) is positioned in a cavity (120) defined by a wall (122) of at least one of the compressor inlet casing (86) and the inlet plenum body (50).

11. A gas turbine engine (10), comprising:
an inlet section (12) comprising an inlet plenum body (50), the inlet plenum body (50) comprising an inlet plenum body inner surface (66, 70, 74, 78, 82) and defining an inlet plenum therein (84);
a compressor (14) comprising a compressor inlet casing (86) coupled to the inlet plenum body (50), the compressor inlet casing (86) comprising a compressor inlet casing inner surface (88) and defining a compressor inlet passage (94) extending therethrough;
one or more combustors (16);
a turbine (18); and
one or more sound attenuating panels (102) coupled to at least one of the compressor inlet casing inner surface (88) and the inlet plenum body inner surface (66, 70, 74, 78, 82), each sound attenuating panel (102) comprising:
a first sheet (104) defining a first plurality of apertures (106) extending therethrough; and
a second sheet (108) spaced apart from the first sheet (104).

12. The gas turbine engine (10) of claim 11, further comprising:
a cone (96) at least partially positioned in the inlet plenum (84), the cone (96) comprising a cone outer surface (98), and wherein at least one of the sound attenuating panels (102) couples to the cone outer surface (98).

13. The gas turbine engine (10) of claim 12, wherein the cone (96) is partially positioned in the compressor inlet passage (94).

14. The gas turbine engine (10) of claim 13, wherein a portion of the at least one sound attenuating panel (102) coupled to the cone (96) is axially aligned with a portion of the at least one sound attenuating panel (102) coupled to the compressor inlet casing inner surface (88).

15. The gas turbine engine (10) of any of claims 11, to 14 wherein each sound attenuating panel (102) comprises a honeycomb insert (110) positioned between and coupled to the first sheet (104) and the second sheet (108).
